# EUROPEAN PATENT SPECIFICATION

(11) **EP 4 030 151 B1**
(45) Date of publication and mention of the grant of the patent: **23.04.2025**
(21) Application number: 21152046.5
(22) Date of filing: 18.01.2021
(51) Int. Cl.: G01F 23/284, H01P 5/02, H01Q 1/22

(54) **WAVEGUIDE FOR A RADAR LEVEL GAUGE**
WELLENLEITER FÜR EINEN RADARFÜLLSTANDMESSER
GUIDE D'ONDES POUR UNE JAUGE DE NIVEAU À RADAR

(43) Date of publication of application: 20.07.2022
(73) Proprietor: Rosemount Tank Radar AB, 435 23 Mölnlycke (SE)
(72) Inventor: FREDRIKSSON, Håkan, 589 51 LINKÖPING (SE); OHLSSON, Magnus, 610 21 NORSHOLM (SE)
(74) Representative: Kransell & Wennborg KB

(56) References cited:
- EP-A2- 0 780 664
- US-A- 6 148 681
- US-A1- 2018 010 949
- US-A1- 2018 113 020
- US-A1- 2019 331 518

## Description

### Field of the Invention

The present invention relates to a waveguide for a radar level gauge system. In particular, the present invention relates to a waveguide comprising two waveguide sections.

### Background of the Invention

Radar level gauge (RLG) systems are in wide use for determining the filling level of a product contained in a tank. Radar level gauging is generally performed either by means of non-contact measurement, whereby electromagnetic signals are radiated towards the product contained in the tank, or by means of contact measurement, often referred to as guided wave radar (GWR), whereby electromagnetic signals are guided towards and into the product by a probe acting as a waveguide or transmission line.

The transmitted electromagnetic signals are reflected at the surface of the product, and the reflected signals are received by a receiver or transceiver comprised in the radar level gauge. Based on the transmitted and reflected signals, the distance to the surface of the product can be determined. More particularly, the distance to the surface of the product is generally determined based on the time between transmission of an electromagnetic signal and reception of the reflection thereof in the interface between the atmosphere in the tank and the product contained therein. In order to determine the actual filling level of the product, the distance from a reference position to the surface is determined based on the above-mentioned time (the so-called time-of-flight) and the propagation velocity of the electromagnetic signals.

In a radar level gauge system, many different parts must be joined together to both propagate the signal from the signal generation circuitry to the antenna and for providing a tight seal of the tank. In a high-frequency system, it is particularly important to provide a propagation path without any gaps or other interruptions in the waveguide chain.

PTFE (Polytetrafluoroethylene) is a commonly used material for seal and/or antenna parts, and due to the thermal expansion properties of the material it is difficult to achieve the tight tolerances of the waveguide that are often required, particularly for high frequencies, i.e. in the GHz range, where a gap-free waveguide chain becomes important to maintain signal performance. To reach the required tolerances, it may be necessary to use special assembly methods such as laser welding which complicates the assembly process.

Accordingly, it is desirable to find solutions where high-frequency a radar level gauge and a waveguide signal path can be achieved without resorting to complicated and specialized assembly methods while still fulfilling the required tolerance levels.

US 6,148,681 describes an example of a process seal assembly for installation in a process vessel opening. In particular, US 6,148,681 describes a modular design of a probe assembly including a probe and process seal assembly which mount to a transmitter assembly and to an opening on a process vessel such as a tank.

US 2018/0113020 A1 discloses a radar level gauge according to the prior art, comprising a directional antenna, a hollow wave guide connected to the antenna, wherein a spring member is arranged between a fastening member and a clamping member, allowing a pressure tight sealing between a tank interior and a tank exterior.

### Summary

In view of above-mentioned and other drawbacks of the prior art, it is an object of the present invention to provide a waveguide for a radar level gauge comprising a high-frequency waveguide addressing the drawbacks of presently known solutions.

According to a first aspect of the invention, there is provided a waveguide for connecting measurement circuitry to an antenna in a radar level gauge. The waveguide comprises: a first tubular waveguide section having a female connecting portion, the first tubular waveguide section having a first abutment surface on an outer surface; a second tubular waveguide section having a male connecting portion arranged within the female connection portion so that the first and second waveguide portions are movable relative each other in an axial direction and to provide a continuous tubular passage through the waveguide, the second tubular waveguide section having a second abutment surface; and a spring arranged to abut against the first abutment surface and the second abutment surface.

The antenna is configured to be vertically arranged in a tank or container for measuring the level of a content of the container. In particular, the antenna is typically arranged to emit a signal vertically into a tank such that the signal reaches a surface of a product in the tank and is reflected back towards the antenna where it is received such that the distance from the antenna to the surface can be determined, thereby making it possible to determine the fill level in the tank.

The measurement circuitry is typically arranged outside of the tank in a housing connected to a feed-trough where a vertically arranged waveguide connects the measurement circuitry to the antenna.

The present invention is based on the realization that issues relating to tight tolerances and the requirement of a gap-free waveguide can be overcome by the described two-part waveguide design which is spring-loaded to avoid gaps also during temperature changes when thermal expansion and contraction may occur. The described waveguide simplifies manufacturing and assembly since it consists of few parts and since machining of the two waveguide sections can be performed with high precision with existing manufacturing methods, thereby providing a cost effective and reliable solution.

According to one embodiment of the invention, the spring is biased between the first and second abutment surfaces when the waveguide is installed in a tank. Preferably, the spring is biased so that first and second tubular waveguide sections can move both towards and away from each other.

According to one embodiment of the invention, the first and second abutment surfaces are provided in the form of a first and second portion protruding from an outer surface of the first and second waveguide section, respectively. The protruding portions may for example be a respective shoulder of the waveguide section reaching around the circumference of the first and second waveguide section.

There is also provided a radar level gauge feed-through assembly comprising a waveguide according to any one of the described embodiments, wherein the radar level gauge feed-through further comprises: a housing; a housing connection; and a dielectric antenna body, wherein the waveguide is arranged between the housing connection and the dielectric antenna body.

The radar level gauge feed-through assembly may further comprise a locking ring in which the waveguide is at least partially arranged, the locking ring being configured to allow movement of the first and/or second waveguide portion only in the axial direction. Moreover, the antenna body may be a lens antenna.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates an exemplary tank arrangement comprising a guided wave radar level gauge system according to an embodiment of the invention;
Fig. 2 is a block diagram schematically illustrating measurement circuitry of radar level gauge system according to an embodiment of the invention;
Figs. 3A-B are schematic illustrations of a waveguide according to an embodiment of the invention in open and closed positions; and
Fig. 4 is schematic illustration of a radar level gauge feed-through assembly comprising a waveguide according to an embodiment of the invention.

### Detailed Description of Example Embodiments

In the present detailed description, various embodiments of the waveguide according to the present invention are mainly described with reference to a free-radiating radar level gauge system installed in a tank located on land. However, the described system and method is suitable for use in other areas such as in marine applications. Moreover, various embodiments of the present invention are mainly discussed with reference to a radar level gauge comprising a lens antenna even though other types of antennas are also feasible.

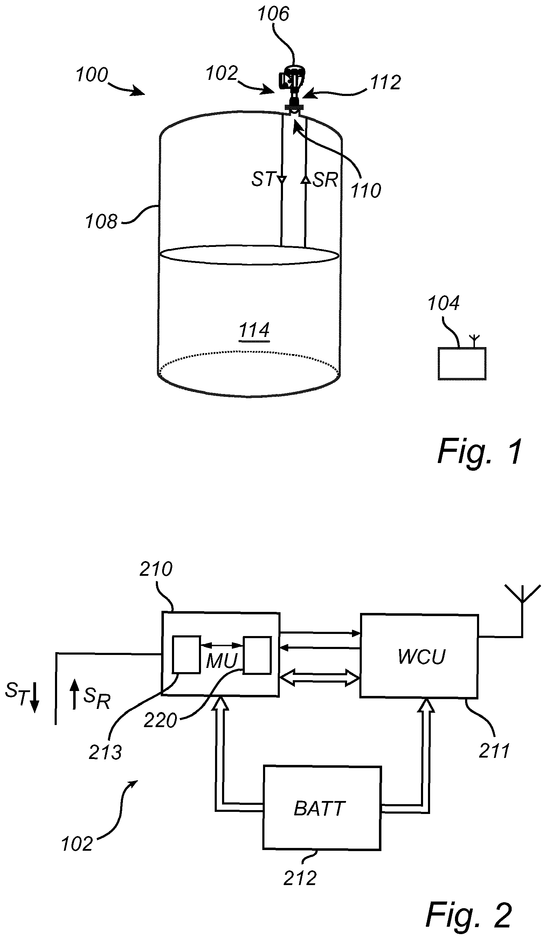

Fig. 1 schematically shows a tank level monitoring system 100 comprising an example embodiment of a radar level gauge system 102 wirelessly connected to a host system 104. In the illustrated example, the radar level gauge system 102 is battery powered. However, the described radar level gauge system 102 may equally well be loop-powered or powered by dedicated power lines.

The radar level gauge system 102 comprises a measurement electronics unit 106 arranged on an outside of the tank 108, an antenna 110 at least partly arranged on an inside the tank 108, and a feed-through assembly 112 connecting the measurement electronics unit 106 with the antenna 110.

The radar level gauge system 102 is arranged on a tank 108 containing a product 114 to be gauged. To reduce the energy consumption of the radar level gauge system 102, at least parts of the radar level gauge system 102 may be operated intermittently and energy may be stored during inactive or idle periods to be used during active periods.

With reference to Fig. 2, the radar level gauge system 102 in Fig. 1 comprises a measurement unit (MU) 210, a wireless communication unit (WCU) 211 and a local energy storage unit for example in the form of a battery 212. The wireless communication unit 211 may advantageously be compliant with WirelessHART (IEC 62591). As is schematically indicated in Fig. 2, the MU 210 comprises a transceiver module 213 and a measurement processor 220. The transceiver module 213 is controllable by the measurement processor 220 for generating, transmitting and receiving electromagnetic signals having frequencies defining a frequency bandwidth, such as 75G-80GHz. The measurement processor 220 is coupled to the transceiver 213 for determining the filling level in the tank 108 based on a relation between the transmit signal S_{T} and the reflection signal S_{R}.

The measurement processor 220 may include a microprocessor, microcontroller, programmable digital signal processor or another programmable device. The measurement processor 220 may also, or instead, include an application specific integrated circuit, a programmable gate array or programmable array logic, a programmable logic device, or a digital signal processor. Where the measurement processor 220 includes a programmable device such as the microprocessor, microcontroller or programmable digital signal processor mentioned above, the processor may further include computer executable code that controls operation of the programmable device.

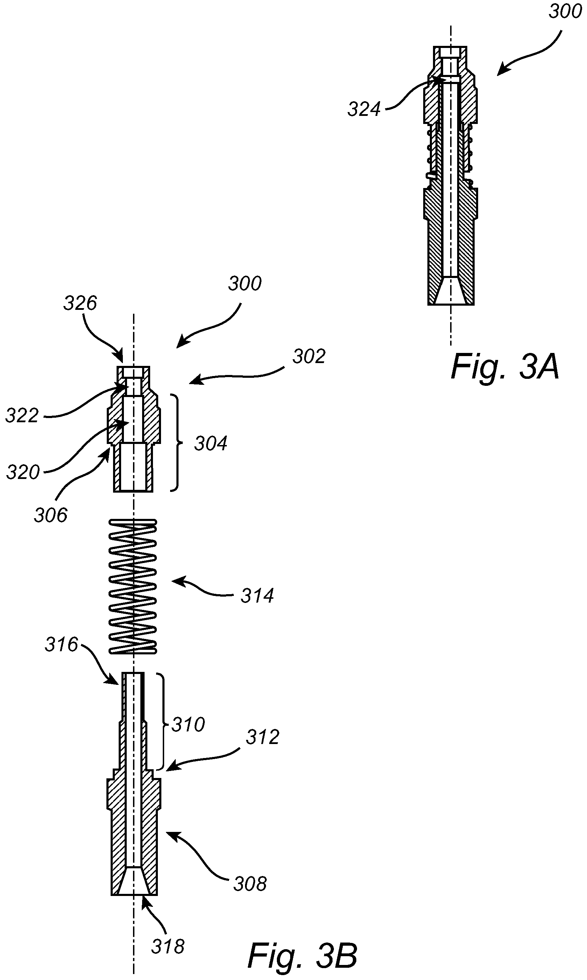

Fig. 3A schematically illustrates a waveguide according to an embodiment of the invention and Fig. 3B is an exploded view of the waveguide 300. The waveguide 300 is configured to connect the measurement circuitry illustrated in Fig. 2 to an antenna.

The waveguide 300 comprises a first tubular waveguide section 302 having a female connecting portion 304. The first tubular waveguide section 302 further comprises a first abutment surface 306 on an outer surface thereof. The second tubular waveguide section 308 comprises a male connecting portion 310 configured to be arranged within the female connection portion 304 so that the first and second waveguide sections 302, 308 are movable relative each other in an axial direction and to provide a continuous tubular passage through the waveguide 300. The second tubular waveguide section 308 further comprises a second abutment surface 312.

To enable relative axial movement in both directions of the waveguide sections 302, 308, a spring 314 is arranged to abut against the first abutment surface 306 and the second abutment surface 308. The spring 314 is thus arranged between the first and second tubular waveguide sections 302, 308 and biased between the first and second abutment surfaces 306, 312.

In Figs. 3A-B , the first and second abutment surfaces 306, 312 are formed by portions of the first and second tubular waveguide sections 302, 308 having a larger diameter than adjacent portions which are closer to the opposing waveguide section. Accordingly, the first and second protruding portions 306, 312 may form a shoulder reaching around the circumference of the first and second waveguide section 302, 308, respectively. However, it should be noted that the abutment surfaces 306, 312 could be formed in many different ways, such as in the form of a collar or in the form of a plurality of protrusions as long as it enables the compression of the spring between the two waveguide sections 302, 308. Moreover, it would also be possible to mechanically attach the ends of the spring 314 to the respective waveguide sections 302, 308.

As illustrated in Fig. 3B, a first end portion 316 of the male connecting portion 310 of the second waveguide section 308, here illustrated as an upper portion, has a smaller outer diameter compared to remaining portions of the second waveguide section 308, and the female connecting portion 304 of the first waveguide section 302 has a portion 320 with a correspondingly smaller inner diameter configured to match said outer diameter. The female connection portion 304 and the male connecting portion 310 are thus configured be in contact to form a sliding joint between the first tubular waveguide section 302 and the second tubular waveguide section 308.

To allow relative axial movement of the waveguide sections in both directions, there will be a small gap 324 in the assembled waveguide 300 as illustrated in Fig. 3A where the end portion 316 of the second waveguide section does not reach the bottom of the narrower portion 320 of the first waveguide section 302. To minimize the influence on signal propagation of such a gap 324, it is desirable to minimize the wall thickness of the end portion 316 of the second waveguide section 308. Thereby, the end portion 316 of the male connecting element 310 preferably has a wall thickness in the range of 0.1-1 mm. It has been shown that with the aforementioned wall thickness, the gap 324 may be as large as 10 mm without noticeable reduction in the quality of the propagated signal. In an example implementation, the allowable relative movement in the axial direction is in the range of ± 1mm. However, the skilled person readily realizes that the waveguide easily can be configured to allow more movement.

Moreover, the illustrated pocket 322 at the top of the first waveguide section is formed as part of a reflection adaptation together with a glass feedthrough 326 for connecting the waveguide 300 to signal generation circuitry. Additionally, a second end portion of the second waveguide section 308 comprises a conical opening 318 acting as a feeder horn for providing the signal to a lens antenna. In applications where the first waveguide section is closest to the antenna, the conical opening is thus arranged in an end portion of the first waveguide section facing the antenna.

The inner diameter of the waveguide is preferably selected so that the main propagation mode is the TE₁₁ mode for a given frequency. In the TE₁₁ mode, the electric field is perpendicular to the direction of propagation, and for a circular waveguide, a signal in the TE₁₁ mode propagates with minimum degradation. For a circular waveguide, a diameter of 2.6 mm provides a single mode bandwidth (TE₁₁) for the frequency range 67.6 GHz - 88.3 GHz. As discussed above and illustrated in Fig. 3A, there is a small gap 324 which will result in a portion of the waveguide having a larger diameter than the remainder of the waveguide. In this small portion with the larger dimeter, resonances may arise for certain axial lengths of the gap and for certain frequencies, which in turn means that other modes such as the TM₀₁ mode may occur. However, the waveguide is preferably designed to minimize the occurrence of resonances for a given operating frequency.

Even though embodiments of the waveguide are described with reference to a circular waveguide, the signal propagation path of the waveguide may equally well be formed by a rectangular waveguide. Thereby, the tubular waveguide may have either a circular or a rectangular cross-section.

The described waveguide con be configured and adapted in many different ways to suit a given application. The first and second waveguide sections 302, 308 may for example be flipped so that the second waveguide section 308 is arranged above the first waveguide section 302, i.so that the waveguide section with the male connection portion is arranged above the waveguide section with the female connection portion. The lengths and other dimensions of the different parts such as the male and female connecting portions may also be varied as long as the waveguide as a whole fulfils the required signal propagation properties.

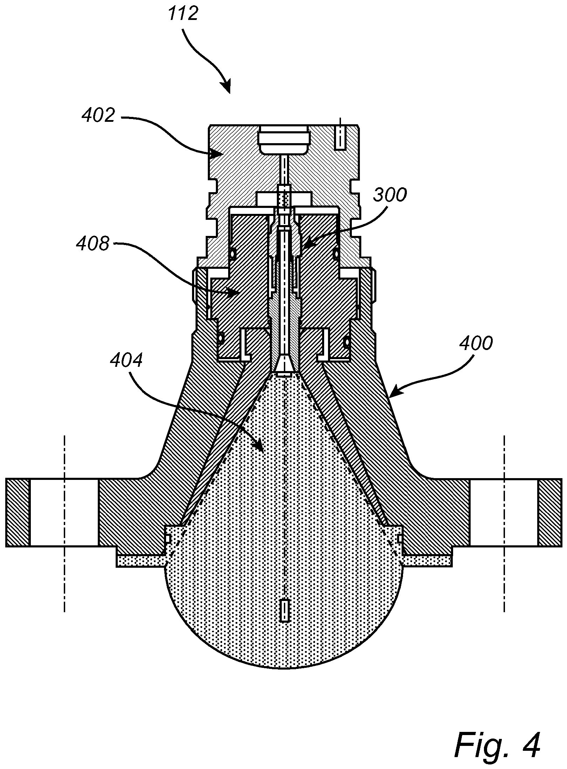

Fig. 4 schematically illustrates a radar level gauge feed-through assembly 112 comprising the waveguide 300 illustrated in Figs. 3A-B . The feed-through assembly 112 further comprises a housing 400, a housing connection 402; and a dielectric antenna body 404, wherein the waveguide 300 is arranged between the housing connection 402 and the dielectric antenna body 404 here illustrated as a lens antenna.

The feed-through assembly 112 further comprises a locking ring 408 in which the waveguide 300 is at least partially arranged. The locking ring 408 is configured to hold the waveguide 300 to allow movement of the first and/or second waveguide portion 302, 308 only in the axial direction.

In Fig. 4, the waveguide is illustrated in connection with a free radiating antenna, but the principles of the described waveguide may equally well be implemented in a guided wave radar (GWR) system using a signal propagation device in the form of a single lead probe or the like.

Even though the invention has been described with reference to specific exemplifying embodiments thereof, many different alterations, modifications and the like will become apparent for those skilled in the art. Also, it should be noted that parts of the system and method may be omitted, interchanged or arranged in various ways, the system and method yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A waveguide (300) for connecting measurement circuitry to an antenna in a radar level gauge, the waveguide comprising:
a first tubular waveguide section (302) having a female connecting portion (304), the first tubular waveguide section having a first abutment surface (306) on an outer surface;
a second tubular waveguide section (308) having a male connecting portion (310) arranged within the female connection portion so that the first and second waveguide portions are movable relative each other in an axial direction and to provide a continuous tubular passage through the waveguide, the second tubular waveguide section having a second abutment surface (312); and
a spring (314) arranged to abut against the first abutment surface and the second abutment surface.

2. The waveguide according to claim 1, wherein the spring is biased between the first and second abutment surfaces.

3. The waveguide according to claim 1 or 2, wherein the first and second abutment surfaces are provided in the form of a first and second portion protruding from an outer surface of the first and second waveguide section, respectively.

4. The waveguide according to claim 3, wherein the first and second protruding portion is a shoulder reaching around the circumference of the first and second waveguide section, respectively.

5. The waveguide according to any one of the preceding claims,
wherein the female connection portion and the male connecting portion are configured be in contact to form a sliding joint between the first tubular waveguide section and the second tubular waveguide section.

6. The waveguide according to any one of the preceding claims,
wherein a first end portion (316) of the male connecting element has a wall thickness in the range of 0.1-1 mm.

7. The waveguide according to any one of the preceding claims,
wherein a second end portion of the second tubular waveguide section comprises a conical opening (318) configured to feed a signal to an antenna.

8. The waveguide according to any one of the preceding claims,
wherein an inner diameter of the first and second tubular waveguide sections is configured to propagate a signal having a frequency of in the range of 65 GHz to 90 GHz.

9. The waveguide according to any one of the preceding claims,
wherein an inner diameter of the first and second tubular waveguide sections is adapted for propagation of the TE₁₁ mode.

10. A radar level gauge feed-through assembly (112) comprising a waveguide (300) according to any one of the preceding claims, the radar level gauge further comprising:
a housing (400);
a housing connection (402); and
a dielectric antenna body (404), wherein the waveguide is arranged between the housing connection and the dielectric antenna body.

11. The radar level gauge feed-through assembly according to claim 10, further comprising a locking ring (408) in which the waveguide is at least partially arranged, the locking ring being configured to allow movement of the first and/or second waveguide portion only in the axial direction.

12. The radar level gauge feed-through assembly according to claim 10 or 11, wherein the dielectric antenna body (404) is a lens antenna.

13. A tank comprising a radar level gauge feed-through assembly according to any one of claims 10 to 12.

## Patentansprüche

1. Wellenleiter (300) zum Verbinden einer Messschaltungsanordnung mit einer Antenne in einem Radarfüllstandsanzeiger, wobei der Wellenleiter umfasst:
einen ersten röhrenförmigen Wellenleiterabschnitt (302) mit einem Aufnahmeverbindungsabschnitt (304), wobei der erste röhrenförmige Wellenleiterabschnitt eine erste Anschlagfläche (306) auf einer äußeren Fläche aufweist;
einen zweiten röhrenförmigen Wellenleiterabschnitt (308) mit einem Steckverbindungsabschnitt (310), der innerhalb des Aufnahmeverbindungsabschnitts angeordnet ist, so dass der erste und der zweite Wellenleiterabschnitt in axialer Richtung relativ zueinander beweglich sind und einen durchgehenden röhrenförmigen Durchgang durch den Wellenleiter vorsehen, wobei der zweite röhrenförmige Wellenleiterabschnitt eine zweite Anschlagfläche (312) aufweist; und
eine Feder (314), die so angeordnet ist, dass sie an der ersten Anschlagfläche und der zweiten Anschlagfläche anliegt.

2. Wellenleiter nach Anspruch 1, wobei die Feder zwischen der ersten und der zweiten Anschlagfläche vorgespannt ist.

3. Wellenleiter nach Anspruch 1 oder 2, wobei die erste und die zweite Anschlagfläche in Form eines ersten und eines zweiten Abschnitts gebildet sind, die von einer äußeren Fläche des ersten bzw. des zweiten Wellenleiterabschnitts vorstehen.

4. Wellenleiter nach Anspruch 3, wobei der erste und der zweite vorstehende Abschnitt eine Schulter sind, die sich um den Umfang des ersten bzw. des zweiten Wellenleiterabschnitts erstreckt.

5. Wellenleiter nach einem der vorhergehenden Ansprüche, wobei der Aufnahmeverbindungsabschnitt und der Steckverbindungsabschnitt eingerichtet sind, um in Kontakt zu sein, um eine Gleitverbindung zwischen dem ersten röhrenförmigen Wellenleiterabschnitt und dem zweiten röhrenförmigen Wellenleiterabschnitt zu bilden.

6. Wellenleiter nach einem der vorhergehenden Ansprüche, wobei ein erster Endabschnitt (316) des Steckverbindungselements eine Wandstärke in dem Bereich von 0,1 bis 1 mm aufweist.

7. Wellenleiter nach einem der vorhergehenden Ansprüche, wobei ein zweiter Endabschnitt des zweiten röhrenförmigen Wellenleiterabschnitts eine konische Öffnung (318) umfasst, die eingerichtet ist, um einer Antenne ein Signal zuzuführen.

8. Wellenleiter nach einem der vorhergehenden Ansprüche, wobei ein Innendurchmesser des ersten und des zweiten röhrenförmigen Wellenleiterabschnitts eingerichtet ist, um ein Signal mit einer Frequenz in dem Bereich von 65 GHz bis 90 GHz auszubreiten.

9. Wellenleiter nach einem der vorhergehenden Ansprüche, wobei ein Innendurchmesser des ersten und des zweiten röhrenförmigen Wellenleiterabschnitts zur Ausbreitung des TE₁₁-Modus ausgelegt ist.

10. Radarfüllstandsanzeiger-Durchführungsanordnung (112), umfassend einen Wellenleiter (300) nach einem der vorhergehenden Ansprüche, wobei der Radarfüllstandsanzeiger ferner umfasst:
ein Gehäuse (400);
eine Gehäuseverbindung (402); und
einen dielektrischen Antennenkörper (404), wobei der Wellenleiter zwischen der Gehäuseverbindung und dem dielektrischen Antennenkörper angeordnet ist.

11. Radarfüllstandsanzeiger-Durchführungsanordnung nach Anspruch 10, ferner umfassend einen Verriegelungsring (408), in dem der Wellenleiter zumindest teilweise angeordnet ist, wobei der Verriegelungsring eingerichtet ist, um eine Bewegung des ersten und/oder des zweiten Wellenleiterabschnitts nur in der axialen Richtung zu ermöglichen.

12. Radarfüllstandsanzeiger-Durchführungsanordnung nach Anspruch 10 oder 11, wobei der dielektrische Antennenkörper (404) eine Linsenantenne ist.

13. Tank, umfassend eine Radarfüllstandsanzeiger-Durchführungsanordnung nach einem der Ansprüche 10 bis 12.

## Revendications

1. Guide d'ondes (300) pour la connexion d'un circuit de mesure à une antenne dans une jauge de niveau à radar, le guide d'ondes comprenant :
une première section tubulaire de guide d'ondes (302) comportant une partie de connexion femelle (304), la première section tubulaire de guide d'ondes comportant une première surface de butée (306) sur une surface extérieure ;
une deuxième section tubulaire de guide d'ondes (308) comportant une partie de connexion mâle (310) disposée dans la partie de connexion femelle de telle façon que les première et deuxième parties de guide d'ondes sont déplaçables l'une par rapport à l'autre dans une direction axiale et de manière à fournir un passage tubulaire continu à travers le guide d'ondes, la deuxième section tubulaire de guide d'ondes comportant une deuxième surface de butée (312) ; et
un ressort (314) disposé de manière à buter contre la première surface de butée et la deuxième surface de butée.

2. Guide d'ondes selon la revendication 1, dans lequel le ressort est sollicité entre les première et deuxième surfaces de butée.

3. Guide d'ondes selon la revendication 1 ou 2, dans lequel les première et deuxième surfaces de butée sont disposées sous la forme d'une première et d'une deuxième surface faisant saillie à partir d'une surface extérieure des première et deuxième sections de guide d'ondes, respectivement.

4. Guide d'ondes selon la revendication 3, dans lequel les première et deuxième parties faisant saillie sont un épaulement atteignant la circonférence des première et deuxième sections de guide d'ondes, respectivement.

5. Guide d'ondes selon l'une quelconque des revendications précédentes, dans lequel la partie de connexion femelle et la partie de connexion mâle sont configurées pour être en contact de manière à former un joint coulissant entre la première section tubulaire de guide d'ondes et la deuxième section tubulaire de guide d'ondes.

6. Guide d'ondes selon l'une quelconque des revendications précédentes, dans lequel une première partie d'extrémité (316) de l'élément de connexion mâle présente une épaisseur de paroi comprise entre 0,1 et 1 mm.

7. Guide d'ondes selon l'une quelconque des revendications précédentes, dans lequel une deuxième partie d'extrémité de la deuxième section tubulaire de guide d'ondes comprend une ouverture conique (318) configurée pour fournir un signal à une antenne.

8. Guide d'ondes selon l'une quelconque des revendications précédentes, dans lequel un diamètre intérieur des première et deuxième sections tubulaires de guide d'ondes est configuré pour propager un signal présentant une fréquence comprise entre 65 GHz et 90 GHz.

9. Guide d'ondes selon l'une quelconque des revendications précédentes, dans lequel un diamètre intérieur des première et deuxième sections tubulaires de guide d'ondes est adapté pour la propagation du mode TE₁₁.

10. Ensemble de traversée de jauge de niveau à radar (112) comprenant un guide d'ondes (300) selon l'une quelconque des revendications précédentes, la jauge de niveau à radar comprenant en outre :
un logement (400) ;
une connexion de logement (402) ; et
un corps d'antenne diélectrique (404), dans laquelle le guide d'ondes est disposé entre la connexion de boîtier et le corps d'antenne diélectrique.

11. Ensemble de traversée de jauge de niveau à radar selon la revendication 10, comprenant en outre une bague de verrouillage (408) dans laquelle le guide d'ondes est au moins partiellement disposé, la bague de verrouillage étant configurée pour permettre le déplacement de la première et/ou de la deuxième partie de guide d'ondes uniquement dans la direction axiale.

12. Ensemble de traversée de jauge de niveau à radar selon la revendication 10 ou 11, dans lequel le corps d'antenne - diélectrique (404) est une antenne à lentille.

13. Réservoir comprenant un ensemble de traversée de jauge de niveau à radar selon l'une quelconque des revendications 10 à 12.
